# EUROPÄISCHE PATENTSCHRIFT

(11) **EP 3 429 919 B1**
(45) Veröffentlichungstag und Bekanntmachung des Hinweises auf die Patenterteilung: **06.05.2020**
(21) Anmeldenummer: 17708740.0
(22) Anmeldetag: 02.03.2017
(51) Int. Cl.: B63H 23/32, F16C 17/14, B63H 11/08, B63H 20/00, C23F 13/02, F16C 33/20

(54) **STRAHLANTRIEB INSBESONDERE FÜR EIN WASSERFAHRZEUG UND VERFAHREN ZUM NACHRÜSTEN EINES STRAHLANTRIEBS**
JET PROPULSION SYSTEM PARTICULARLY FOR A WATERCRAFT, AND METHOD FOR RETROFITTING A JET PROPULSION SYSTEM
PROPULSION PAR JET, EN PARTICULIER POUR UN VÉHICULE NAUTIQUE ET PROCÉDÉ DE MODIFICATION EN RATTRAPAGE D'UNE PROPULSION PAR JET

(30) Priorität: 16.03.2016 DE 102016204304
(43) Veröffentlichungstag der Anmeldung: 23.01.2019
(73) Patentinhaber: Voith Patent GmbH, 89522 Heidenheim (DE)
(72) Erfinder: BEER, Mathias, 89551 Königsbronn (DE)
(74) Vertreter: Voith Patent GmbH - Patentabteilung
(86) Internationale Anmeldenummer: PCT/EP2017/054847
(87) Internationale Veröffentlichungsnummer: WO 2017/157673

(56) Entgegenhaltungen:
- WO-A1-2005/049420
- WO-A1-2013/135796
- DE-A1-102008 048 412
- DE-A1-102011 017 776
- US-A- 4 932 795

## Beschreibung

Die vorliegende Erfindung betrifft einen Strahlantrieb, insbesondere für ein Wasserfahrzeug, gemäß dem Oberbegriff von Anspruch 1. Die Erfindung betrifft ferner ein Verfahren zum Nachrüsten eines Strahlantriebs.

Ein gattungsgemäßer Strahlantrieb wird in WO 2010/130426 A1 offenbart. Der Strahlantrieb zeichnet sich dadurch aus, dass der Rotor über seinem äußeren Umfang drehbar in einem Gehäuse gelagert ist und an seinem Innenumfang Rotorblätter trägt. Der Läufer ist, entsprechend einer vorteilhaften Ausführungsform der vorliegenden Erfindung, nabenfrei gestaltet, das heißt die Rotorblätter enden radial innen frei und sind vorteilhaft an ihren radial inneren Enden nicht miteinander verbunden.

Besonders beim Einsatz solcher Strahlantriebe in Wasserfahrzeugen treten, wenn die Strahlantriebe vom salzhaltigen oder sediment- beziehungsweise kalkhaltigem Wasser, insbesondere Seewasser umspült oder durchspült werden, Korrosionsprobleme auf. Bekanntlich können sogenannte Opferanoden entsprechende Korrosionsprobleme lösen. Allerdings ist es in der Praxis in der Regel nicht möglich, genügend Opferanodenmasse am Rotor anzubringen, um über mehrere Jahre im Betrieb einen Korrosionsschutz in ausreichendem Maße sicherzustellen.

DE 10 2011 017 776 A1 offenbart ein Lager mit korrosionsgeschütztem Lagerteil, wobei das Lagerteil als Kathode einer Fremdstromquelle geschaltet ist und eine Anode der Fremdstromquelle gegenüber dem Lagerteil beabstandet angeordnet ist.

Der vorliegenden Erfindung liegt die Aufgabe zugrunde, einen Strahlantrieb, insbesondere für ein Wasserfahrzeug, anzugeben, das die vorgenannten Korrosionsprobleme dadurch löst, das der Rotor durch elektrische Kontaktierung in das statorseitig vorhandene kathodische Schutzsystem einbezogen wird.

Die erfindungsgemäße Aufgabe wird durch einen Strahlantrieb mit den Merkmalen der unabhängigen Ansprüche gelöst. In den abhängigen Ansprüchen sind vorteilhafte und besonders zweckmäßige Gestaltungen der Erfindung angegeben. Der unabhängige Verfahrensanspruch beschreibt ein erfindungsgemäßes Nachrüstverfahren für einen bestehenden, insbesondere gebrauchten Strahlantrieb, wobei das Verfahren jedoch auch bei der Neuherstellung eines Strahlantriebes angewendet werden kann.

Ein erfindungsgemäßer Strahlantrieb, der insbesondere als Wasserfahrzeugstrahlantrieb ausgeführt ist, weist wenigstens eine Antriebseinheit auf, die einen Rotor umfasst, an dessen Innenumfang Rotorblätter fixiert sind. Die Rotorblätter sind insbesondere starr am Innenumfang des Rotors angeschlossen, beispielsweise angeschraubt. Der Rotor ist insbesondere als nabenfreier Rotor ausgeführt, wie eingangs dargelegt wurde.

Die Antriebseinheit weist ferner ein Gehäuse auf, in welchem der Rotor mittels wenigstens einer Lagerung drehbar gelagert ist. Die Lagerung umfasst wenigstens ein Axiallager und wenigstens ein Radiallager. Beispielsweise sind zwei Radiallager und ein Axiallager vorgesehen, insbesondere ein Radiallager im Bereich jedes axialen Endes des Rotors und im Bereich nur eines axialen Endes das Axiallager, bespielweise mit einer axial beidseitig vom Gehäuse eingeschlossenen Spurscheibe. Es können beispielsweise aber auch zwei Axiallager und zwei Radiallager vorgesehen sein, insbesondere jeweils eins pro axialem Ende des Rotors. Auch die Integration eines Axiallagers mit einem Radiallager ist möglich.

Erfindungsgemäß ist der Rotor elektrisch leitend mit dem Gehäuse verbunden. Durch diese elektrisch leitende Verbindung kann ein Potentialausgleich erfolgen, sozusagen eine Erdung des Rotors zu dem Gehäuse. Dadurch kann ein sicherer Korrosionsschutz über die gesamte Betriebsdauer des Strahlantriebs erzielt werden, dessen Wirkung nicht oder zumindest nicht wesentlich nachlässt.

Das wenigstens eine Radiallager und/oder Axiallager kann/können vorteilhaft als wassergeschmiertes Lager, insbesondere seewassergeschmiertes Lager ausgeführt sein.

Das Axiallager und/oder Radiallager ist/sind vorteilhaft als Gleitlager ausgeführt.

Die Antriebseinheit ist gemäß einer Ausführung der Erfindung als elektrische Antriebseinheit ausgeführt. Demnach ist im Gehäuse ein elektrischer Stator vorgesehen und der Rotor ist als elektrischer Läufer ausgeführt, sodass der Rotor durch ein elektromagnetisches Feld zwischen Rotor und Stator angetrieben wird.

Gemäß einer Ausführungsform der Erfindung wird die elektrisch leitende Verbindung zwischen dem Rotor und dem Gehäuse durch ein oder mehrere Gleitstücke in dem wenigstens einen Axiallager und/oder in dem wenigstens einen Radiallager hergestellt. Ein solches Gleitstück beziehungsweise solche Gleitstücke ist/sind zwischen dem Gehäuse und dem Rotor positioniert und aus einem elektrisch leitenden Material hergestellt. Damit kann ein elektrischer Strom über wenigstens ein Lager vom Rotor zum Gehäuse fließen.

Gemäß einer alternativen Ausführungsform sind die Gleitstücke beziehungsweise ist das Gleitstück in dem wenigstens einen Axiallager und dem wenigstens einen Radiallager aus einem elektrisch isolierenden Material hergestellt, sodass kein Strom vom Rotor über die Lager beziehungsweise das Material des Gleitstücks zum Gehäuse fließen kann. Daher ist bei dieser Gestaltung außerhalb der Gleitstücke wenigstens ein elektrisch leitendes Kontaktelement vorgesehen, welches mit dem Rotor und dem Gehäuse in elektrisch leitender Verbindung steht, sodass ein elektrischer Strom vom Rotor über das wenigstens eine elektrisch leitende Kontaktelement zum Gehäuse fließen kann. Zusätzlich oder alternativ kann ein solches elektrisch leitendes Kontaktelement beziehungsweise können solche elektrisch leitende Kontaktelemente auch in einer oder mehreren das oder die Gleitstücke durchdringende(n) Bohrung(en) vorgesehen sein.

Günstig ist, wenn das wenigstens eine elektrisch leitende Kontaktelement elastisch zwischen dem Gehäuse und dem Rotor verspannt ist. Dies kann dadurch erreicht werden, dass das elektrisch leitende Kontaktelement selbst elastisch verformbar ist, also als Feder ausgebildet ist, insbesondere aus einem Federstahl, oder dadurch, dass das Kontaktelement durch wenigstens ein Federelement am Rotor oder vorteilhaft am Gehäuse abgestützt ist.

Das oder die elektrischen Kontaktelemente können am Rotor und/oder am Gehäuse montiert sein.

Gemäß einer Ausführungsform der Erfindung ist das wenigstens eine elektrisch leitende Kontaktelement stiftförmig, insbesondere mit einem in Radialrichtung zu einer Längsachse des Kontaktelementes vorstehenden Kopf an wenigstens einem axialen Ende des Kontaktelementes. Das Kontaktelement kann beispielsweise als Kohlestift ausgeführt sein. Gemäß einer anderen Ausführungsform ist das Kontaktelement pilzförmig und aus Metall, insbesondere aus Bronze oder Kupfer.

Selbstverständlich sind auch andere als stiftförmige Gestaltungen des wenigstens einen Kontaktelementes möglich, insbesondere aus Metall. Beispielsweise ist das Kontaktelement plattenförmig oder leistenförmig. Dabei kann das Kontaktelement als ebene Platte oder als gebogene Platte eingeführt sein, je nach seiner Erstreckung im Spalt zwischen dem Rotor und dem Gehäuse. Eine Ausführungsform der Erfindung sieht eine kreisförmige oder zylinderförmige Platte in einer im Gehäuse eingebrachten Bohrung oder Ausnehmung vor, in welcher beispielsweise zuvor ein Gleitstück eingebracht war.
Gemäß einer Ausführungsform der Erfindung weist das wenigstens eine Axiallager und/oder das wenigstens eine Radiallager jeweils eine Vielzahl von über dem Umfang des Rotors verteilt angeordnete elektrisch leitende Gleitstücke auf und das wenigstens eine Kontaktelement beziehungsweise die Kontaktelemente ist/sind in Umfangsrichtung zwischen den Gleitstücken des wenigstens einen Axiallagers und/oder Radiallagers positioniert.

Das oder die Gleitstücke können aus einem verschleißärmeren Werkstoff als das wenigstens eine Kontaktelement hergestellt sein. Insbesondere weisen das oder die Gleitstücke eine größere Oberflächenhärte oder insgesamt eine größere Härte auf als das wenigstens eine Kontaktelement.

Wenigstens ein Gleitstück, insbesondere die Gleitstücke des oder der Radiallager sind gemäß einer Ausführungsform der Erfindung als Kippsegment ausgeführt und derart insbesondere im Gehäuse gelagert, dass sich jedes einzelne Kippsegment selbsttätig in Abhängigkeit der wirkenden Kräfte ausrichtet. Gemäß einer Ausführungsform der Erfindung sind entsprechende Kippsegmente zumindest über einer tangential durch das Radiallager verlaufenden Kippachse und/oder einer axial durch das Radiallager verlaufenden Kippachse beweglich.

Das Axiallager kann insbesondere eine Spurscheibe aufweisen, die in Axialrichtung beidseitig gegenüber dem Gehäuse, insbesondere gegenüber dort positionierten Gleitstücken zwischen dem Gehäuse und der Spurscheibe abgestützt ist.

Das wenigstens eine elektrisch leitende Kontaktelement ist, besonders wenn dieses als Leiste oder Platte ausgeführt ist, gemäß einer Ausführungsform der Erfindung unbeweglich beziehungsweise starr im Gehäuse oder am Rotor gelagert. Dies ist jedoch nicht zwingend notwendig.

Gemäß einer Ausführungsform der Erfindung ist das wenigstens eine Kontaktelement in einer in Radialrichtung im Gehäuse eingebrachten Bohrung oder Ausnehmung aufgenommen. Bei mehreren Kontaktelementen können entsprechend mehrere Bohrungen oder Ausnehmungen im Gehäuse vorgesehen sein. Wenn das Kontaktelement einen wie zuvor dargestellten Kopf aufweist, kann dieser teilweise oder vollständig aus der Bohrung beziehungsweise der Ausnehmung in Radialrichtung des Gehäuses herausragen und insbesondere mit seiner dem Rotor abgewandten Seite an einer Fläche im Gehäuse anschlagen beziehungsweise über ein Federelement abgestützt sein.

Gemäß einer Ausführungsform der Erfindung stehen ein oder mehrere elektrisch leitende Kontaktelemente bei Inbetriebnahme des Strahlantriebs zunächst über die radial innen angeordneten Oberflächen der Gleitstücke hinaus und verschleißen anschließend während des Betriebs des Strahlantriebs, bis sie mit der radial inneren Oberfläche der Gleitstücke eingeebnet sind. Anschließend erfolgt ein weiterer Verschleiß der Gleitstücke und des wenigstens einen Kontaktelementes in Radialrichtung gleichzeitig, sodass eine permanente Kontaktierung zwischen dem Rotor und dem Gehäuse über das wenigstens eine elektrisch leitende Kontaktelement sichergestellt ist.

Gemäß einem erfindungsgemäßen Verfahren zum Nachrüsten eines wie zuvor dargestellt ausgeführten Strahlantriebs wird wenigstens einer der folgenden Schritte ausgeführt:
1. Austauschen von wenigstens einem oder mehreren bestehenden elektrisch isolierenden Gleitstücken zwischen dem Gehäuse und dem Rotor in dem wenigstens einen Axiallager und/oder Radiallager durch wenigstens ein oder mehrere elektrisch leitende Gleitstücke;
2. Einbringen wenigstens eines elektrisch leitenden Kontaktelementes in wenigstens eine Bohrung in wenigstens einem bestehenden Gleitstück zwischen dem Gehäuse und dem Rotor in dem wenigstens einen Axiallager und/oder Radiallager derart, dass das Kontaktelement in elektrisch leitender Verbindung mit dem Gehäuse und dem Rotor steht;
3. Austauschen von wenigstens einem oder mehreren bestehenden elektrisch isolierenden Gleitstücken zwischen dem Gehäuse und dem Rotor in dem wenigstens einen Axiallager und/oder Radiallager durch wenigstens ein oder mehrere elektrisch leitende Kontaktelemente derart, dass das wenigstens eine Kontaktelement in elektrisch leitender Verbindung mit dem Rotor und dem Gehäuse steht;
4. Einbringen wenigstens eines elektrisch leitenden Kontaktelementes außerhalb von einem oder mehreren bestehenden elektrisch isolierenden Gleitstücken zwischen dem Gehäuse und dem Rotor in dem wenigstens einen Axiallager und/oder Radiallager derart, dass das wenigstens eine Kontaktelement in elektrisch leitender Verbindung mit dem Rotor und dem Gehäuse steht.

Wie zuvor dargestellt, können das oder die elektrisch leitenden Kontaktelemente derart in oder außerhalb des oder der Gleitstücke eingebracht werden, dass sie zunächst über den radial inneren Umfang der Gleitstücke herausragen und sich beim Betrieb des Strahlantriebs abnutzen, bis sie auf einem gemeinsamen inneren Umfang mit dem oder den Gleitstücken liegen. Anschließend erfolgt ein gemeinsames Abnutzen beziehungsweise Verschleißen des wenigstens einen Kontaktelementes und des wenigstens einen Gleitstücks in Radialrichtung des Rotors.

Die Erfindung soll nachfolgend anhand von Ausführungsbeispielen und den Figuren exemplarisch beschrieben werden.

Es zeigen:
- Figur 1: eine Ausgestaltung eines Strahlantriebs mit einem in Axialrichtung wirkenden Kontaktelement;
- Figur 2: eine Vergrößerung eines Ausschnitts aus der Figur 1 mit dem Kontaktelement;
- Figur 3: eine Ausführungsform mit einem in Radialrichtung wirkendem Kontaktelement;
- Figur 4: einen Strahlantrieb mit in ein Radiallager integriertem Kontaktelement;
- Figur 5: eine vergrößerte Darstellung des Radiallagers aus der Figur 4;
- Figur 6: einen Radialschnitt durch das Radiallager aus der Figur 5;
- Figur 7: eine alternative Ausgestaltung zur Figur 6.

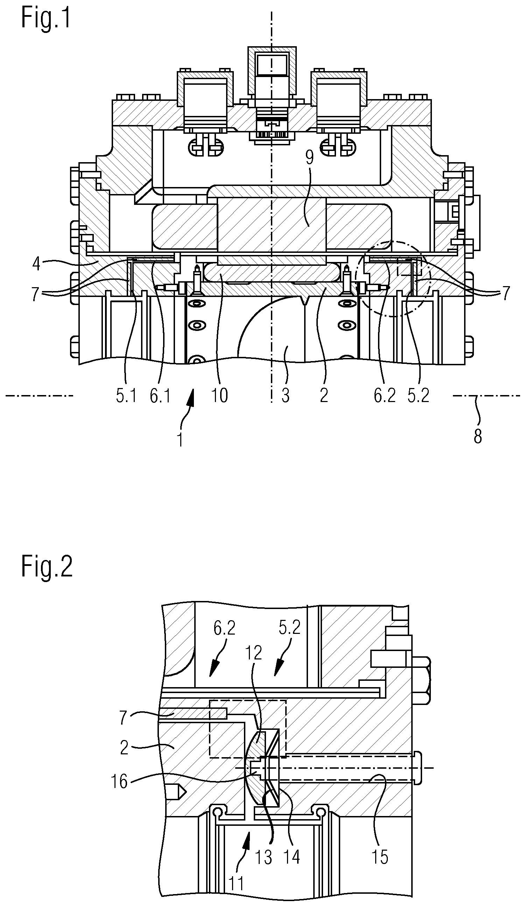

In der Figur 1 ist ein Strahlantrieb in einem Axialschnitt dargestellt, umfassend eine Antriebseinheit 1 mit einem Rotor 2, an dessen Innenumfang Rotorblätter 3 fixiert sind. Der Rotor 2 ist in einem Gehäuse 4 gelagert. Die Lagerung umfasst zwei Axiallager 5.1 und 5.2, von denen das erste im Bereich eines ersten axialen Endes des Rotors 2 vorgesehen ist und den Rotor 2 in eine erste Axialrichtung abstützt und das zweite im Bereich des anderen axialen Endes des Rotors 2 vorgesehen ist und den Rotor 2 in die entgegengesetzte Axialrichtung abstützt.

Die Lagerung umfasst ferner zwei Radiallager 6.1 und 6.2, von denen jeweils eines im Bereich eines axialen Endes des Rotors 2 vorgesehen ist und den Rotor 2 in Radialrichtung abstützt.

Jedes der Axiallager 5.1, 5.2 und Radiallager 6.1, 6.2 weist eine Vielzahl von Gleitstücken 7 auf, die zwischen dem Rotor 2 und dem Gehäuse 4 entlang des Umfangs des Rotors 2 über der Drehachse 8 des Rotors 2 positioniert sind. Beispielsweise sind die Gleitstücke 7 starr oder auch beweglich im Gehäuse 4 gelagert. Im letzteren Fall sind zumindest einzelne Gleitstücke 7 vorteilhaft als Kippsegmente ausgeführt, um ein Kippsegmentlager auszubilden.

Die Antriebseinheit 1 ist als elektrische Antriebseinheit ausgeführt, wobei im Gehäuse 4 ein elektrischer Stator 9 und im Rotor 2 eine elektrische Wicklung beziehungsweise vorteilhaft Permanentmagneten 10 vorgesehen sind, um einen elektrischen beziehungsweise elektromagnetischen Antrieb des Rotors 2 zu bewirken.

In der Figur 2 ist ersichtlich, dass anstelle von Gleitstücken in wenigstens einem Axiallager 5.2 ein elektrisch leitendes Kontaktelement 11 eingebracht ist, das vorteilhaft in eine Ausnehmung beziehungsweise eine Bohrung 14 im Gehäuse 4 eingesetzt ist, in der vor einer Nachrüstung des Strahlantriebs ein Gleitstück gehalten wurde. Das Kontaktelement 11 weist im gezeigten Ausführungsbeispiel eine im Querschnitt kreisförmige oder auch anders gestaltete Platte 12 sowie eine Druckfeder, hier in Form einer Tellerfeder 13 auf, wobei die Tellerfeder 13 die Platte 12 axial gegen den Spurring des Rotors 2 drückt. Die Platte 2 und die Tellerfeder 13 sind aus einem elektrisch leitenden Werkstoff, insbesondere Metall, beispielsweise Bronze, hergestellt, sodass durch Anlage des Kontaktelementes 11 am Rotor 2 und am Gehäuse 4 eine elektrisch leitende Verbindung zwischen dem Rotor 2 und dem Gehäuse 4 hergestellt wird. Mit dieser elektrisch leitenden Verbindung erfolgt ein Potentialausgleich und somit ein Korrosionsschutz.

Im gezeigten Ausführungsbeispiel ist im Gehäuse 4 eine Durchgangsbohrung 15 eingebracht und in der Platte 12 ist eine Blindbohrung 16 eingebracht, derart, dass durch die Durchgangsbohrung 15 eine Schraube in die Blindbohrung 16 eingeschraubt werden kann, um zu verhindern, dass während der Montage des Rotors 2 beziehungsweise des Gehäuses 4 das jeweilige Kontaktelement 11 aus der Bohrung 14 des Gehäuses 4 herausfällt. Selbstverständlich kommen andere Lösungen in Betracht, beispielsweise könnte, wie durch die gestrichelten Linien angedeutet, das Kontaktelement 11 auch stiftförmig ausgeführt sein, wobei die Platte 12 dann beispielsweise als Kopf an einem Ende des Kontaktelementes 11 in Radialrichtung zu einer Längsachse des Kontaktelementes 11 hervorstehen würde. Andere Gestaltungen sind ebenfalls möglich.

Bei der in der Figur 2 gezeigten Ausgestaltung sind insbesondere eine Vielzahl von Gleitstücken des Axiallagers 5.2 durch Kontaktelemente 11 ersetzt. Dies kann bei einem der beiden Axiallager oder bei beiden Axiallagern 5.1, 5.2 entsprechend der Figur 1 vorgesehen sein.

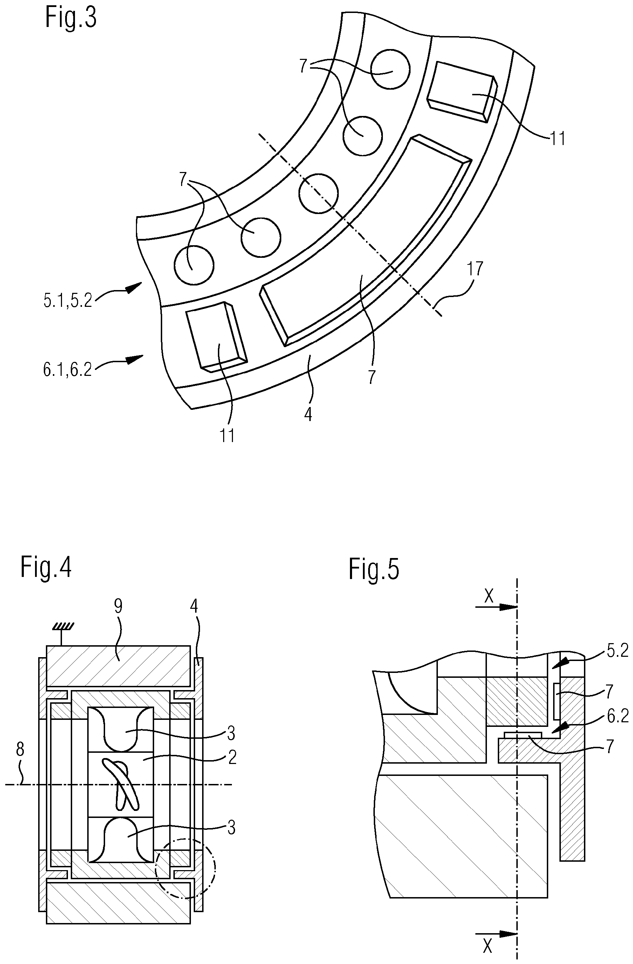

Anhand der Figur 3 ist exemplarisch dargestellt, wie ein Kontaktelement 11 in eines der Radiallager 6.1, 6.2 integriert werden kann. Im gezeigten Ausführungsbeispiel sind die Gleitstücke 7 des Radiallagers 6.1, 6.2 als Kippsegmente ausgeführt, welche über der Achse 17 kippbar sind. Das oder die Kontaktelemente 11 sind in Umfangsrichtung des Radiallagers 6.1, 6.2 zwischen den Gleitstücken 7 positioniert.

Ein einziges Kontaktelement 11 kann ausreichen, vorteilhaft sind jedoch je Radiallager 6.1, 6.2 mehrere Kontaktelemente 11 vorgesehen.

Auch bei dem in der Figur 3 gezeigten Ausführungsbeispiel könnte anstelle eines oder mehrerer Gleitstücke 7 des Axiallagers 5.1, 5.2 ein Kontaktelement 11 vorgesehen sein, beispielsweise entsprechend der Darstellung in der Figur 2.

In der Figur 4 ist nochmals schematisch der im Gehäuse 4 gelagerte Rotor 2 dargestellt. Man erkennt, dass die Rotorblätter 3 frei radial innen im Rotor 2 münden. Der Rotor 2 ist als nabenfreier Rotor ausgeführt.

In der Figur 5 ist eine Vergrößerung des Axiallagers 5.2 und Radiallagers 6.2, die als kombiniertes Axial-Radial-Lager bezeichnet werden können, gezeigt. Man sieht nochmals die Gleitstücke 7 im Axiallager 5.2 und im Radiallager 6.2. Einzelne dieser Gleitstücke 7 können durch elektrisch leitende Kontaktelemente ersetzt werden. Zusätzlich oder alternativ können in Umfangsrichtung zwischen die Gleitstücke 7 elektrisch leitende Kontaktelemente eingesetzt werden, wobei abweichend von der Gestaltung in der Figur 3 die Kontaktelemente 11 auch als Stift, insbesondere elastisch druckbelasteter Stift, in das Gehäuse 4 eingesetzt sein könnten. Ein solcher Stift kann beispielsweise eine zylindrische Form aufweisen oder eine Form, gemäß der Gestaltung aus der Figur 2.

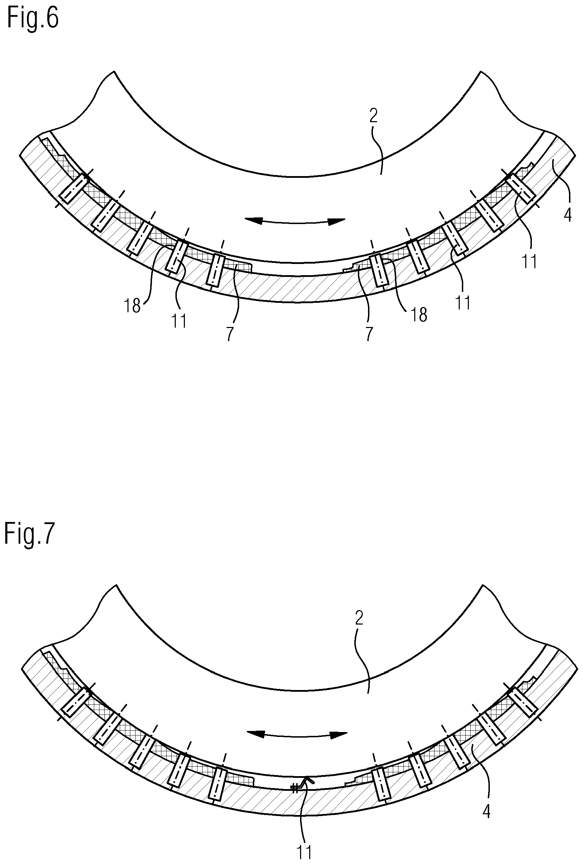

In der Figur 6 sind die Gleitstücke 7 selbst mit Kontaktelementen 11 versehen. Diese Kontaktelemente 11 sind hier stiftförmig und beispielsweise als Kohlestift ausgeführt.

Insbesondere sind die Kontaktelemente 11 in Durchgangsbohrungen 18 in den Gleitstücken 7 eingebracht und ragen bis in das Material des Gehäuses 4 hinein. Nach der Montage und bei Inbetriebnahme können die Kontaktelemente 11 in Radialrichtung nach innen aus den Gleitstücken 7 hervorstehen und werden dann im weiteren Betrieb durch Kontakt mit dem Rotor 2 abgerieben, bis sie bündig mit der radial inneren Oberfläche der Gleitstücke 7 abschließen.

In der Figur 7 ist als zusätzliche oder alternative Möglichkeit das Vorsehen eines Kontaktelementes 11 in Form einer elastischen Feder, insbesondere aus Federstahl, zwischen dem Rotor 2 und dem Gehäuse 4 gezeigt.

### Bezugszeichenliste

- 1: Antriebseinheit
- 2: Rotor
- 3: Rotorblätter
- 4: Gehäuse
- 5.1, 5.2: Axiallager
- 6.1,6.2: Radiallager
- 7: Gleitstück
- 8: Drehachse
- 9: Stator
- 10: Permanentmagnet
- 11: Kontaktelement
- 12: Platte
- 13: Tellerfeder
- 14: Bohrung
- 15: Durchgangsbohrung
- 16: Blindbohrung
- 17: Achse
- 18: Durchgangsbohrung

## Patentansprüche

1. Strahlantrieb, insbesondere für ein Wasserfahrzeug, mit wenigstens einer Antriebseinheit (1), die
einen Rotor (2), an dessen Innenumfang Rotorblätter (3) fixiert sind, und
ein Gehäuse (4), in welchem der Rotor (2) mittels wenigstens einer Lagerung drehbar gelagert ist, umfasst; wobei
die Lagerung wenigstens ein Axiallager (5.1, 5.2) und wenigstens ein Radiallager (6.1, 6.2) umfasst;
**dadurch gekennzeichnet, dass**
der Rotor (2) elektrisch leitend mit dem Gehäuse (4) verbunden ist; wobei das wenigstens eine Axiallager (5.1, 5.2) und/oder das wenigstens eine Radiallager (6.1, 6.2) jeweils ein oder mehrere Gleitstücke (7) aufweist, das/die zwischen dem Gehäuse (4) und dem Rotor (2) positioniert und aus einem elektrisch leitenden Material hergestellt ist/sind.

2. Strahlantrieb, insbesondere für ein Wasserfahrzeug, mit wenigstens einer Antriebseinheit (1), die
einen Rotor (2), an dessen Innenumfang Rotorblätter (3) fixiert sind, und
ein Gehäuse (4), in welchem der Rotor (2) mittels wenigstens einer Lagerung drehbar gelagert ist, umfasst; wobei
die Lagerung wenigstens ein Axiallager (5.1, 5.2) und wenigstens ein Radiallager (6.1, 6.2) umfasst;
**dadurch gekennzeichnet, dass**
der Rotor (2) elektrisch leitend mit dem Gehäuse (4) verbunden ist; wobei das wenigstens eine Axiallager (5.1, 5.2) und das wenigstens eine Radiallager (6.1, 6.2) jeweils ein oder mehrere Gleitstücke (7) aufweist, die zwischen dem Gehäuse (4) und dem Rotor (2) positioniert sind und aus einem elektrisch isolierenden Material hergestellt sind, und dass außerhalb der Gleitstücke (7) und/oder in wenigstens einer ein Gleitstück (7) durchdringenden Bohrung (18) wenigstens ein elektrisch leitendes Kontaktelement (11) vorgesehen ist, welches mit dem Rotor (2) und dem Gehäuse (4) in elektrisch leitender Verbindung steht.

3. Strahlantrieb gemäß Anspruch 1, **dadurch gekennzeichnet, dass** in Umfangsrichtung zwischen den Gleitstücken (7) des wenigstens einen Axiallagers (5.1, 5.2) und/oder Radiallagers (6.1, 6.2) wenigstens ein elektrisch leitendes Kontaktelement (11) vorgesehen ist, welches mit dem Rotor (2) und dem Gehäuse (4) in elektrisch leitender Verbindung steht.

4. Strahlantrieb gemäß einem der Ansprüche 1 bis 3, **dadurch gekennzeichnet, dass** der Strahlantrieb ein Wasserfahrzeugstrahlantrieb ist, wobei das wenigstens eine Axiallager (5.1, 5.2) und/oder das wenigstens eine Radiallager (6.1, 6.2) als wassergeschmiertes Lager, insbesondere seewassergeschmiertes Lager, ausgeführt ist.

5. Strahlantrieb gemäß Anspruch 2 oder 3, **dadurch gekennzeichnet, dass** das wenigstens eine Kontaktelement (11) elastisch zwischen dem Gehäuse (4) und dem Rotor (2) verspannt ist.

6. Strahlantrieb gemäß einem der Ansprüche 2 bis 5, **dadurch gekennzeichnet, dass** das wenigstens eine Kontaktelement (11) stiftförmig ist, insbesondere mit einem in Radialrichtung zu einer Längsachse des Kontaktelementes (11) vorstehenden Kopf an wenigstens einem axialen Ende des Kontaktelementes (11).

7. Strahlantrieb gemäß Anspruch 6, **dadurch gekennzeichnet, dass** das wenigstens eine Kontaktelement (11) als Kohlestift ausgeführt ist.

8. Strahlantrieb gemäß Anspruch 5, **dadurch gekennzeichnet, dass** das wenigstens eine Kontaktelement (11) plattenförmig oder leistenförmig ist.

9. Strahlantrieb gemäß einem der Ansprüche 6 bis 8, **dadurch gekennzeichnet, dass** das Kontaktelement (11) derart in Axialrichtung oder Radialrichtung des Rotors (2) in einer Bohrung (14) im Gehäuse (4) eingesetzt ist, dass es insbesondere mit seinem Kopf teilweise oder vollständig in Richtung des Rotors (2) aus der Bohrung (14) herausragt.

10. Strahlantrieb gemäß einem der Ansprüche 6, 8 oder 9, **dadurch gekennzeichnet, dass** das wenigstens eine Kontaktelement (11) aus Metall, insbesondere aus Kupfer oder Bronze, hergestellt ist.

11. Strahlantrieb gemäß Anspruch 5, **dadurch gekennzeichnet, dass** das wenigstens eine Kontaktelement (11) als Feder, insbesondere aus einem Federstahl, ausgeführt ist.

12. Strahlantrieb gemäß einem der Ansprüche 2 bis 11, **dadurch gekennzeichnet, dass** das wenigstens eine Axiallager (5.1, 5.2) und/oder das wenigstens eine Radiallager (6.1, 6.2) jeweils eine Vielzahl von über dem Umfang des Rotors (2) verteilt angeordnete Gleitstücke (7) aufweist und das wenigstens eine Kontaktelement (11) in Umfangsrichtung zwischen den Gleitstücken (7) des wenigstens einen Axiallagers (5.1, 5.2) und/oder Radiallagers (6.1, 6.2) positioniert ist.

13. Strahlantrieb gemäß einem der Ansprüche 2 bis 12, **dadurch gekennzeichnet, dass** eine Vielzahl der Kontaktelemente (11) vorgesehen ist.

14. Strahlantrieb gemäß einem der Ansprüche 2 bis 13, **dadurch gekennzeichnet, dass** das wenigstens eine Gleitstück (7) oder die Gleitstücke (7) aus einem verschleißärmeren Werkstoff, insbesondere mit einer größeren Härte oder Oberflächenhärte als das wenigstens eine Kontaktelement (11), hergestellt ist/sind.

15. Verfahren zum Nachrüsten eines Strahlantriebs insbesondere für ein Wasserfahrzeug, umfassend wenigstens eine Antriebseinheit (1), die einen Rotor (2), an dessen Innenumfang Rotorblätter (3) fixiert sind, und ein Gehäuse (4), in welchem der Rotor (2) mittels wenigstens einer Lagerung drehbar gelagert ist, umfasst, wobei die Lagerung wenigstens ein Axiallager (5.1, 5.2) und wenigstens ein Radiallager (6.1, 6.2) umfasst, mit den folgenden Schritten:
15.1 Austauschen von wenigstens einem oder mehreren bestehenden elektrisch isolierenden Gleitstücken (7) zwischen dem Gehäuse (4) und dem Rotor (2) in dem wenigstens einen Axiallager (5.1, 5.2) und/oder Radiallager (6.1, 6.2) durch wenigstens ein oder mehrere elektrisch leitende Gleitstücke (7); und/oder
15.2 Einbringen wenigstens eines elektrisch leitenden Kontaktelementes (11) in wenigstens eine Bohrung in wenigstens einem bestehenden Gleitstück (7) zwischen dem Gehäuse (4) und dem Rotor (2) in dem wenigstens einen Axiallager (5.1, 5.2) und/oder Radiallager (6.1, 6.2) derart, dass das Kontaktelement (11) in elektrisch leitender Verbindung mit dem Gehäuse (4) und dem Rotor steht (2); und/oder
15.3 Austauschen von wenigstens einem oder mehreren bestehenden elektrisch isolierenden Gleitstücken (7) zwischen dem Gehäuse (4) und dem Rotor (2) in dem wenigstens einen Axiallager (5.1, 5.2) und/oder Radiallager (6.1, 6.2) durch wenigstens ein oder mehrere elektrisch leitende Kontaktelemente (11) derart, dass das wenigstens eine Kontaktelement (11) in elektrisch leitender Verbindung mit dem Rotor (2) und dem Gehäuse (4) steht; und/oder
15.4 Einbringen wenigstens eines elektrisch leitenden Kontaktelementes (11) außerhalb von einem oder mehreren bestehenden elektrisch isolierenden Gleitstücken (7) zwischen dem Gehäuse (4) und dem Rotor (2) in dem wenigstens einen Axiallager (5.1, 5.2) und/oder Radiallager (6.1, 6.2) derart, dass das wenigstens eine Kontaktelement (11) in elektrisch leitender Verbindung mit dem Rotor (2) und dem Gehäuse (4) steht.

## Claims

1. Jet propulsion system, particularly for a watercraft, comprising at least one propulsion unit (1), which comprises
a rotor (2), on the inner circumference of which rotor blades (3) are fixed, and
a housing (4), in which the rotor (2) is rotatably mounted by means of at least one bearing assembly; the bearing assembly comprising at least one axial bearing (5.1, 5.2) and at least one radial bearing (6.1, 6.2);
**characterized in that**
the rotor (2) is connected to the housing (4) in an electrically conducting manner;
the at least one axial bearing (5.1, 5.2) and/or the at least one radial bearing (6.1, 6.2) respectively having one or more sliding blocks (7), which is/are positioned between the housing (4) and the rotor (2) and is/are produced from an electrically conducting material.

2. Jet propulsion system, particularly for a watercraft, comprising at least one propulsion unit (1), which comprises
a rotor (2), on the inner circumference of which rotor blades (3) are fixed, and
a housing (4), in which the rotor (2) is rotatably mounted by means of at least one bearing assembly;
the bearing assembly comprising at least one axial bearing (5.1, 5.2) and at least one radial bearing (6.1, 6.2);
**characterized in that**
the rotor (2) is connected to the housing (4) in an electrically conducting manner;
**in that** the at least one axial bearing (5.1, 5.2) and the at least one radial bearing (6.1, 6.2) respectively having one or more sliding blocks (7), which are positioned between the housing (4) and the rotor (2) and are produced from an electrically insulating material, and **in that** at least one electrically conducting contact element (11), which is in electrically conducting connection with the rotor (2) and the housing (4), is provided outside the sliding blocks (7) and/or in at least one bore (18) penetrating a sliding block (7).

3. Jet propulsion system according to Claim 1, **characterized in that** at least one electrically conducting contact element (11), which is in electrically conducting connection with the rotor (2) and the housing (4), is provided between the sliding blocks (7) of the at least one axial bearing (5.1, 5.2) and/or radial bearing (6.1, 6.2) in the circumferential direction.

4. Jet propulsion system according to one of Claims 1 to 3, **characterized in that** the jet propulsion system is a watercraft jet propulsion system, the at least one axial bearing (5.1, 5.2) and/or the at least one radial bearing (6.1, 6.2) being designed as a water-lubricated bearing, in particular seawater-lubricated bearing.

5. Jet propulsion system according to Claim 2 or 3, **characterized in that** the at least one contact element (11) is elastically braced between the housing (4) and the rotor (2).

6. Jet propulsion system according to one of Claims 2 to 5, **characterized in that** the at least one contact element (11) is in the form of a rod, in particular with a head on at least one axial end of the contact element (11) and protruding in a radial direction in relation to a longitudinal axis of the contact element (11).

7. Jet propulsion system according to Claim 6, **characterized in that** the at least one contact element (11) is designed as a carbon rod.

8. Jet propulsion system according to Claim 5, **characterized in that** the at least one contact element (11) is in the form of a plate or in the form of a strip.

9. Jet propulsion system according to one of Claims 6 to 8, **characterized in that** the contact element (11) is fitted in an axial direction or radial direction of the rotor (2) in a bore (14) in the housing (4) in such a way that it partially or completely protrudes, in particular with its head, out of the bore (14) in the direction of the rotor (2).

10. Jet propulsion system according to one of Claims 6, 8 or 9, **characterized in that** the at least one contact element (11) is produced from metal, in particular from copper or bronze.

11. Jet propulsion system according to Claim 5, **characterized in that** the at least one contact element (11) is designed as a spring, in particular of a spring steel.

12. Jet propulsion system according to one of Claims 2 to 11, **characterized in that** the at least one axial bearing (5.1, 5.2) and/or the at least one radial bearing (6.1, 6.2) has in each case a multiplicity of sliding blocks (7) arranged as distributed over the circumference of the rotor (2) and the at least one contact element (11) is positioned between the sliding blocks (7) of the at least one axial bearing (5.1, 5.2) and/or radial bearing (6.1, 6.2) in the circumferential direction.

13. Jet propulsion system according to one of Claims 2 to 12, **characterized in that** a multiplicity of contact elements (11) is provided.

14. Jet propulsion system according to one of Claims 2 to 13, **characterized in that** the at least one sliding block (7) or the sliding blocks (7) is/are produced from a harder-wearing material, in particular with a greater hardness or surface hardness than the at least one contact element (11).

15. Method for retrofitting a jet propulsion system, particularly for a watercraft, comprising at least one propulsion unit (1), which comprises a rotor (2), on the inner circumference of which rotor blades (3) are fixed, and a housing (4), in which the rotor (2) is rotatably mounted by means of at least one bearing assembly, the bearing assembly comprising at least one axial bearing (5.1, 5.2) and at least one radial bearing (6.1, 6.2), with the following steps:
15.1 exchanging at least one or more existing electrically insulating sliding blocks (7) between the housing (4) and the rotor (2) in the at least one axial bearing (5.1, 5.2) and/or radial bearing (6.1, 6.2) by at least one or more electrically conducting sliding blocks (7); and/or
15.2 introducing at least one electrically conducting contact element (11) into at least one bore in at least one existing sliding block (7) between the housing (4) and the rotor (2) in the at least one axial bearing (5.1, 5.2) and/or radial bearing (6.1, 6.2) in such a way that the contact element (11) is in electrically conducting connection with the housing (4) and the rotor (2); and/or
15.3 exchanging at least one or more existing electrically insulating sliding blocks (7) between the housing (4) and the rotor (2) in the at least one axial bearing (5.1, 5.2) and/or radial bearing (6.1, 6.2) by at least one or more electrically conducting contact elements (11) in such a way that the at least one contact element (11) is in electrically conducting connection with the rotor (2) and the housing (4); and/or
15.4 introducing at least one electrically conducting contact element (11) outside one or more existing electrically insulating sliding blocks (7) between the housing (4) and the rotor (2) in the at least one axial bearing (5.1, 5.2) and/or radial bearing (6.1, 6.2) in such a way that the at least one contact element (11) is in electrically conducting connection with the rotor (2) and the housing (4).

## Revendications

1. Propulsion par jet, en particulier pour un véhicule nautique, comprenant au moins une unité de propulsion (1) qui comprend un rotor (2) sur la périphérie intérieure duquel sont fixées des pales de rotor (3) et un boîtier (4) dans lequel le rotor (2) est supporté à rotation au moyen d'au moins un support sur palier ;
le support sur palier comprenant au moins un palier axial (5.1, 5.2) et au moins un palier radial (6.1, 6.2) ;
**caractérisée en ce que**
le rotor (2) est connecté de manière électriquement conductrice au boîtier (4) ;
l'au moins un palier axial (5.1, 5.2) et/ou l'au moins un palier radial (6.1, 6.2) présentant à chaque fois un ou plusieurs blocs coulissants (7) qui est/sont positionné(s) entre le boîtier (4) et le rotor (2) et qui est/sont fabriqué(s) à partir d'un matériau électriquement conducteur.

2. Propulsion par jet, en particulier pour un véhicule nautique, comprenant au moins une unité de propulsion (1) qui comprend un rotor (2) sur la périphérie intérieure duquel sont fixées des pales de rotor (3) et un boîtier (4) dans lequel le rotor (2) est supporté à rotation au moyen d'au moins un support sur palier ;
le support sur palier comprenant au moins un palier axial (5.1, 5.2) et au moins un palier radial (6.1, 6.2) ;
**caractérisée en ce que**
le rotor (2) est connecté de manière électriquement conductrice au boîtier (4) ;
**en ce que** l'au moins un palier axial (5.1, 5.2) et/ou l'au moins un palier radial (6.1, 6.2) présentant à chaque fois un ou plusieurs blocs coulissants (7) qui est/sont positionné(s) entre le boîtier (4) et le rotor (2) et qui est/sont fabriqué(s) à partir d'un matériau électriquement conducteur, et **en ce qu'**à l'extérieur des blocs coulissants (7) et/ou dans au moins un alésage (18) traversant un bloc coulissant (7) est prévu au moins un élément de contact électriquement conducteur (11) qui est en liaison électriquement conductrice avec le rotor (2) et le boîtier (4).

3. Propulsion par jet selon la revendication 1, **caractérisée en ce qu'**au moins un élément de contact électriquement conducteur (11) est prévu dans la direction périphérique entre les blocs coulissants (7) de l'au moins un palier axial (5.1, 5.2) et/ou de l'au moins un palier radial (6.1, 6.2), lequel est en liaison électriquement conductrice avec le rotor (2) et le boîtier (4).

4. Propulsion par jet selon l'une quelconque des revendications 1 à 3, **caractérisée en ce que** la propulsion par jet est une propulsion par jet pour véhicule nautique, l'au moins un palier axial (5.1, 5.2) et/ou l'au moins un palier radial (6.1, 6.2) étant réalisé(s) sous forme de palier lubrifié à l'eau, en particulier sous forme de palier lubrifié à l'eau de mer.

5. Propulsion par jet selon la revendication 2 ou 3, **caractérisée en ce que** l'au moins un élément de contact (11) est serré élastiquement entre le boîtier (4) et le rotor (2).

6. Propulsion par jet selon l'une quelconque des revendications 2 à 5, **caractérisée en ce que** l'au moins un élément de contact (11) est en forme de goupille, en particulier avec une tête saillant dans la direction radiale par rapport à un axe longitudinal de l'élément de contact (11) au niveau d'au moins une extrémité axiale de l'élément de contact (11).

7. Propulsion par jet selon la revendication 6, **caractérisée en ce que** l'au moins un élément de contact (11) est réalisé sous forme d'électrode au carbone.

8. Propulsion par jet selon la revendication 5, **caractérisée en ce que** l'au moins un élément de contact (11) est en forme de plaque ou en forme de barrette.

9. Propulsion par jet selon l'une quelconque des revendications 6 à 8, **caractérisée en ce que** l'élément de contact (11) est inséré dans la direction axiale ou dans la direction radiale du rotor (2) dans un alésage (14) dans le boîtier (4) de telle sorte qu'il fasse saillie notamment avec sa tête en partie ou complètement dans la direction du rotor (2) hors de l'alésage (14).

10. Propulsion par jet selon l'une quelconque des revendications 6, 8 ou 9, **caractérisée en ce que** l'au moins un élément de contact (11) est fabriqué en métal, en particulier en cuivre ou en bronze.

11. Propulsion par jet selon la revendication 5, **caractérisée en ce que** l'au moins un élément de contact (11) est réalisé sous forme de ressort, en particulier sous forme d'acier à ressort.

12. Propulsion par jet selon l'une quelconque des revendications 2 à 11, **caractérisée en ce que** l'au moins un palier axial (5.1, 5.2) et/ou l'au moins un palier radial (6.1, 6.2) présente(nt) à chaque fois une pluralité de blocs coulissants (7) répartis sur la périphérie du rotor (2) et l'au moins un élément de contact (11) est positionné dans la direction périphérique entre les blocs coulissants (7) de l'au moins un palier axial (5.1, 5.2) et/ou de l'au moins un palier radial (6.1, 6.2).

13. Propulsion par jet selon l'une quelconque des revendications 2 à 12, **caractérisée en ce qu'**une pluralité des éléments de contact (11) est prévu.

14. Propulsion par jet selon l'une quelconque des revendications 2 à 13, **caractérisée en ce que** l'au moins un bloc coulissant (7) ou les blocs coulissants (7) est/sont fabriqué(s) à partir d'un matériau à faible friction, en particulier ayant une plus grande dureté ou dureté de surface que l'au moins un élément de contact (11).

15. Procédé pour l'équipement en rattrapage d'une propulsion par jet en particulier pour un véhicule nautique, comprenant au moins une unité de propulsion (1) qui comprend un rotor (2) sur la périphérie intérieure duquel sont fixées des pales de rotor (3) et un boîtier (4) dans lequel le rotor (2) est supporté à rotation au moyen d'au moins un support sur palier, le support sur palier comprenant au moins un palier axial (5.1, 5.2) et au moins un palier radial (6.1, 6.2), comprenant les étapes suivantes :
15.1 remplacement d'au moins un ou plusieurs blocs coulissants électriquement isolants existants (7) entre le boîtier (4) et le rotor (2) dans l'au moins un palier axial (5.1, 5.2) et/ou l'au moins un palier radial (6.1, 6.2), par au moins un ou plusieurs blocs coulissants électriquement conducteurs (7) ; et/ou
15.2 introduction d'au moins un élément de contact électriquement conducteur (11) dans moins un alésage dans au moins un bloc coulissant existant (7) entre le boîtier (4) et le rotor (2) dans l'au moins un palier axial (5.1, 5.2) et/ou l'au moins un palier radial (6.1, 6.2) de telle sorte que l'élément de contact (11) soit en liaison électriquement conductrice avec le boîtier (4) et le rotor (2) ; et/ou
15.3 remplacement d'au moins un ou plusieurs blocs coulissants électriquement isolants existants (7) entre le boîtier (4) et le rotor (2) dans l'au moins un palier axial (5.1, 5.2) et/ou l'au moins un palier radial (6.1, 6.2), par au moins un ou plusieurs éléments de contact électriquement conducteur (11) de telle sorte que l'au moins un élément de contact (11) soit en liaison électriquement conductrice avec le rotor (2) et le boîtier (4) ; et/ou
15.4 introduction d'au moins un élément de contact électriquement conducteur (11) à l'extérieur d'un ou plusieurs blocs coulissants électriquement isolants existants (7) entre le boîtier (4) et le rotor (2) dans l'au moins un palier axial (5.1, 5.2) et/ou l'au moins un palier radial (6.1, 6.2) de telle sorte que l'au moins un élément de contact (11) soit en liaison électriquement conductrice avec le rotor (2) et le boîtier (4).
